# EUROPEAN PATENT SPECIFICATION

(11) **EP 2 882 801 B1**
(45) Date of publication and mention of the grant of the patent: **31.01.2024**
(21) Application number: 13760077.1
(22) Date of filing: 08.08.2013
(51) Int. Cl.: C08J 5/18, C08J 3/205, C08K 3/04

(54) **CONDUCTIVE POLYMERIC MATERIALS, PREPARATION AND USE THEREOF**
LEITFÄHIGE POLYMERMATERIALIEN, IHRE HERSTELLUNG UND VERWENDUNG
MATÉRIAUX POLYMÈRES CONDUCTEURS, PRÉPARATION ET UTILISATION DE CEUX-CI

(30) Priority: 08.08.2012 GB 201214181
(43) Date of publication of application: 17.06.2015
(73) Proprietor: Haydale Graphene Industries plc, Capel Hendre Ammanford Carmarthenshire SA18 3BL (GB)
(72) Inventor: WALTERS, Ian, Ammanford SA18 6BL (GB); WILLIAMS, Martin, Ammanford SA18 6BL (GB)
(74) Representative: Mewburn Ellis LLP
(86) International application number: PCT/GB2013/052134
(87) International publication number: WO 2014/023977

(56) References cited:
- WO-A1-03/024798
- WO-A1-2006/128261
- WO-A1-2010/112680
- WO-A2-03/040026
- WO-A2-2007/024206
- WO-A2-2008/048705
- DE-A1-102007 057 491
- JP-A- 2004 107 658
- US-A1- 2008 166 563
- US-A1- 2009 104 361

## Description

This invention has to do with polymeric materials having electrical conductivity, particularly films and layer materials, also products comprising them and methods of making and using them. Aspects relate to film materials which are transparent or translucent, with high optical transmission, i.e. showing little absorption of electromagnetic energy, particularly in the visible and UV ranges. These and other aspects include film materials to be used in space and/or exposed to solar radiation, and particularly materials or articles adapted to act as reflectors.

### BACKGROUND

Materials for use on spacecraft (this term being used to encompass in general objects deployed in space) need a special combination of properties. First they need the appropriate mechanical properties for the intended use, usually including adequate strength, tear resistance, flexibility and toughness. They need to be processable to form films or layers, since this is the general format needed. Then they need to be resistant to high temperatures over an extended period and resistant to degradation by the special conditions encountered in space including exposure to atomic oxygen, intense UV radiation and high-energy charged particles. Electrical conductivity can also be important because the build-up of static charge from the impact of charged particles can seriously endanger the integrity of sensitive components inside the spacecraft.

Over the years certain polymer materials such as aromatic polyimides, notably Kapton^{®} (poly-oxydiphenylene-pyromellitimide), have been used extensively for coverings and insulation in space because of their good mechanical and optical properties and chemical/radiation resistance.

However where conductivity is important these aromatic polyimides have not been successful because attempts to incorporate conductive "fillers" lead to excessive loss of transparency and mechanical properties.

Satellites and other craft requiring heat-radiation and the prevention of solar heating use external layer components called optical solar reflectors (OSRs). These typically consist of a thin transparent (usually glass) layer, e.g. quartz or borosilicate glass, backed with a metal reflector layer (usually silver or aluminium). In some products the front side (space side) may have a conductive layer for electrostatic dispersion. However these OSRs are liable to degradation at the front surface in use, leading to gradual loss of translucency, corresponding increase of solar absorptance, and as a result inadequate lifetime.

More generally there is a desire for new and useful kinds of conductive polymer materials.
WO 03/024798 A1 relates to space craft with electrostatic dissipative surfaces. The surface layer including a plurality of carbon nanotubes.
WO 2007/024206 A2 relates to flexible transparent and conductive coatings and films formed using carbon nanotubes, in particular single wall carbon nanotubes, with polymer binders.
WO 03/040026 A2 relates to nanocomposites with an effective dispersion of carbon nanotubes in polymer matrices.
JP 2004 107658 A relates to polyimide films containing carbon nanotubes.
US 2008/166563 A1 relates to thermally conductive films, composite materials including the films, and electrothermal heaters including the films.
DE 10 2007 057491 A1 relates to an article with high electrical conductivity for use in aviation or space technology comprising a resin matrix material with carbon nanotubes embedded therein.
US 2009/104361 A1 relates to a method of preparing carbon nanotube/polymer composites having electromagenetic interference shielding effectiveness.
WO 2010/112680 A1 relates to a composition of carbon nanotubes dispersed in a conductive polymer, the conductive polymer being dispersed or suspended in water and/or a solvent, and said composition further including at least one dispersion or suspension of an elastomer and/or of a thermoplastic polymer.
WO 2008/048705 A2 relates to surface films, paints or primers that can be used in preparing aircraft structural composites that may be exposed to lightening strikes. WO 2006/128261 A1 relates to a method for dispersing carbon nanotubes in a polymer matrix including a step of preparing carbon nanotubes coated with a polymer coating by a method for polymerizing a monomer using a catalytic system

### THE INVENTION

The aim here is to provide new and useful materials suitable for the above uses, and especially to provide OSRs or spacecraft thermal-control materials, desirably addressing the technical issues described above.
In a first aspect herein, we provide an electrostatically-dispersive translucent or transparent film (that is, a film capable of dispersing a static charge) comprising a base layer comprising a film of polymer material in which carbon nanoparticles are dispersed to provide electrical conductivity the content of carbon nanoparticles being less than 3 wt% relative to the polymer material and the light transmission of the polymer film at 550 nm being at least 85%, and
a network of electrically conductive material on the surface of the polymer film
wherein the thickness of the polymer film is from 50 to 200 µm.
The present invention also relates to an optical solar reflector made of the film material according to the present invention according to claim 8.
The present invention also relates to a method of making a film material according to the present invention according to claim 9.
Preferred embodiments are specified in the dependent claims.
The light transmission of the polymer film is at least 85%. Preferably, the light transmission of the polymer film is
at least 90%, at least 93%, or most preferably at least 95%. Alternatively stated, transmission loss or absorptance is not more than 15%, not more than 10%, not more than 7% or not more than 5%. This is for light in the UV and visible range. The measurement of transmission or absorptance may be made e.g. over the range from 250 to 2500 nm representing most of solar radiation, or at a representative wavelength such as 550 or 480 nm, or in any other conventional manner appropriate to the purpose.
**Generally the measurement of the transmission is made at 550 nm.**

The thickness of the polymer film is not particularly limited in general, but may be e.g. at least 60, 80, or at least 100 µm, depending on the mechanical properties required and in particular usually considering optical transmission.

**The thickness of the polymer film is in the range of** 50 to 200 µm.

Preferably the surface resistivity (sometimes known as surface resistance) of the polymer film is not more than 10⁹ Ω/□, or not more than 10⁸ Ω/□. Preferably the surface resistivity of the polymer film is at least 10⁵ Q/D, or at least 10⁶ Ω/□. For OSRs the desired values are in the range from 10⁶ Ω/□ to 10⁸Ω/□, most preferably less than 10⁷Ω/□. This may be measured in any conventional way e.g. by a 4-point test. These are mostly surface resistivity ranges generally appropriate to the dissipation of static, not for conductive components in the general sense. High conductivity is usually neither necessary nor desired for the present uses.

Bulk resistivity of the film is desirably not more than 10¹² Ω.cm or not more than 10¹³ Ω.cm.

The polymer of the film is preferably thermoplastic, although thermoset polymers may be used. The polymer may be a single polymer (which includes the possibility of copolymers as well as homopolymers), or it may be a mixture or blend. It may be in a single layer, e.g. a homogeneous layer, although for various reasons the concentration of conductive particles might vary through the film thickness. Various standard polymer types are suitable, for example polyesters such as polyethylene terephthalate (PET), polyvinyl polymers, (meth)acrylic polymers, polyamides, polyolefins and copolymers of any of these. For some uses such as the specific protective uses contemplated herein preferably the polymer can withstand temperatures of at least 150°C, at least 180°C or at least 200°C, e.g. it may have a Tg above such a value. It may be an amorphous polymer. Desirably it is transparent or translucent or has high transparency, as referred to above.

Suitable polymer types for the latter uses and others include polyether ether ketones (PEEK), polysulphones (PSU) and variants/sub-types such as polyethersulphones (PES) and polyphenylsulphones (PPSU), polyetherimides (PEI) such as Ultem^{®} or similar, polyimides, and fluoropolymers such polyvinyl fluorides (PVF), polyvinylidene fluorides (PVDF) and amorphous polytetrafluoroethylenes (PTFE).

The loading of carbon nanoparticles in the polymer film material is less than 3 wt%, preferably less than 2 wt% or less than 1 wt%, and for some uses more preferably less than 0.5 wt%, less than 0.2 wt% or less than 0.1 wt% relative to the polymer material in which it is dispersed. Conversely the loading may be at least 0.001 wt%, at least 0.005 wt% or at least 0.01 wt%, and for some uses at least 0.1 wt%.

Subject to the type of carbon particles and the thoroughness of their dispersion, and the structure of any agglomerates, clusters or bundles thereof that may exist, there is a compromise between conductivity on the one hand and light transmission % on the other. We find that especially with the methods referred to below we can produce carbon particles which disperse easily and thoroughly in polymer matrix materials, enabling desirable conductivity and transmission performances to be achieved together.
Moreover the carbon particles can positively reinforce the mechanical properties of the film materials, we find. In particular we find that the better the dispersion of the carbon particles, the better the overall level and balance of optical transmission and electrical conductivity

For a reflector film such as an OSR the above film is combined with or provided with a rear reflector layer, such as a metal layer e.g. of silver, aluminium or gold. This layer may be conventional, and may be applied by any suitable means e.g. conventional means.

The film may be provided as a shaped discrete panel or tile. An adhesive layer may be provided behind the reflector layer for affixing the film - e.g. panel or tile - onto an underlying structure such as a spacecraft structure. Or, adhesive may be applied at the time of mounting or installing the film. This may follow conventional practice.

The film itself may be formed in any manner appropriate for the polymer concerned and the target film thickness, e.g. by drawing, rolling, moulding, casting, spin coating or dip coating. These methods facilitate coatings on various surfaces, or the production of multilayered components. Further methods for making such a film use pressure molding in a hydraulic press, hot plates and/or extrusion. All of these techniques can be employed to obtain articles with a wide variety of shapes and sizes.

The conductive particles may be incorporated directly into a melt of the polymer, or into a precursor thereof. However many of the present polymers have high melting points and it is preferred to disperse both the conductive particles and the polymer in a suitable solvent for the polymer. A film or layer may be deposited (cast) from this dispersion onto a substrate surface, e.g. a substrate that in the target product is coated with the film. Or, the cast film may be separated from the deposition substrate and used elsewhere. The cast film may itself be subjected to moulding, pressing or other forming.

Methods of producing a dispersion of the conductive particles in polymer include the following.
(1) Melt mixing, in which conductive particles are mixed with molten polymer by shear methods e.g. using twin screw mixer, rollers and injection molding;
(2) Matrix polymer dissolution in a compatible solvent in which the conductive particles are also dispersed, followed by removing solvent e.g. by casting the layer, optionally with solvent evaporation by reduced-pressure treatment and/or heat;
(3) In-situ polymerisation, in which the conductive particles are mixed with polymer precursor(s) such as monomer(s) or oligomer(s), which is/are then polymerized to form a polymer matrix.

Mechanical mixing and/or ultrasonication may effect dispersion of the conductive particles to produce the filled polymer. Dispersion processes comprising ultrasonication are particularly preferred.

For thermoset polymer layers, curing usually occurs between low molecular weight components (monomers and/or prepolymers). The final processing of thermoset polymers is typically melt compounding, preferably vacuum-assisted resin transfer molding, to avoid the presence of defects. Functionalized carbon nanoparticles are preferably used as the conductive particles, which are dispersed in surfactants or solvents. An epoxy resin may be added to the resulting solution.

For thermoplastic polymers, obtaining a homogeneous dispersion of the conductive particles can be challenging because addition of the particles usually increases the viscosity. So, high-energy high-capacity mixing techniques such as industrial scale shear mixing methods (or a combination of several techniques) may therefore be necessary or desirable. Mixing may be followed by extrusion, co-extrusion or injection molding.

For soluble thermoplastic type polymers, organic solvents can be used to facilitate dispersion of the conductive particles. The solvent may be evaporated off afterwards.

Crystalline thermoplastic polymers that are difficult to solvate in organic solvents may be processed in the molten state. Conductive particles can then be dispersed through the molten polymer. Films or other components may be formed directly from the polymer solution containing such conductive particles.

Conductive particles may be mixed with the monomer (monomer units pre-polymerization). Subsequently, polymerization is initiated, usually thermally or chemically initiated.

Especially with thermoplastic polymer matrices, the filled material may be recovered in the form of pellets or other moulding compound format which can be re-melted for moulding, in a known manner.

### Other film formats

The first aspect above describes a film made from the polymer in which the conductive particles are dispersed, as a composite material. It is also possible to incorporate the conductive particles e.g. carbon nanoparticles in an auxiliary or partial conductive portion, coating, pattern or layer, in combination with a base layer such as a polymeric layer (or glass layer).

Thus, a thin layer of the conductive polymer may be applied onto the outer face of a base (non-conductive or less conductive) layer, forming a laminate having a conductive outer layer. This auxiliary conductive layer may be applied with a carrier solvent which is also a solvent for a polymeric base layer, so that there is fusion of the layers i.e. no sharp interface or boundary between them.

Or, the conductive particles carried in a solvent may be applied to a surface of a polymer layer which is soluble in the solvent, so that the conductive particles become impregnated into the polymer surface before the solvent is evaporated off.

Solvents may be selected in line with the polymer, and conventional solvents such as NMP, THF, dichloromethane, trichloromethane and the like will serve, selected in accordance with the polymer used.

Or, conductive polymer may be applied or formed in a pattern, e.g. in an open network or grid pattern over a surface of the base layer, generally the outer or front surface. In this case, even where high light transmission is significant, the open regions remain completely unobstructed so the lesser light-transmitting ability of the conductive material is less critical. Thus, the loading of the conductive particulate material relative to the polymer or binder may be higher, e.g. limited only by processability, and the optical performance of the binder itself also becomes less critical so that choice may be made among a wider range of polymers suitable as binders or adhesives.

### Conductive Nanoparticles

To get a conductive dispersion of conductive particles in a polymer matrix requires a combination of adequate dispersion with suitable structure and properties of the dispersed material.

Carbon nanoparticles and especially carbon nanotubes have been seen as offering potential conductivity at small weight% loadings because of their extremely high aspect ratio. However in practice this has not been achieved, or has not been useful, because of their powerful tendency to agglomerate. This, together with their relatively poor affinity with solvents and polymer materials, has prevented uniform dispersion on any practically significant scale because the conventional processes for separating and functionalising carbon nanoparticles are so extreme and difficult to control, as well as damaging to the particles themselves.

We have found that when carbon particles are prepared using agitation in low-pressure plasma, such as described in our WO2010/142953 and WO2012/076853, they are readily obtained in a format enabling dispersion in solvents and subsequently in polymer matrices, or directly in polymer melts, at good uniformity and at levels more than adequate for the purposes set out above.

Specifically, the material - especially carbon nanotubes or graphitic carbon bodies - is subjected to a particle treatment method for disaggregating, deagglomerating, exfoliating, cleaning or functionalising particles, in which the particles for treatment are subject to plasma treatment and agitation in a treatment chamber. Preferably the treatment chamber is a rotating container or drum. Preferably the treatment chamber contains or comprises multiple electrically-conductive solid contact bodies or contact formations, the particles being agitated with said contact bodies or contact formations and in contact with plasma in the treatment chamber.

The particles to be treated are preferably carbon particles, such as particles which consist of or comprise graphite, carbon nanotubes (CNTs) or other nanoparticles.

Preferably the contact bodies are moveable in the treatment chamber. The treatment chamber may be a drum, preferably a rotatable drum, in which a plurality of the contact bodies are tumbled or agitated with the particles to be treated. The wall of the treatment vessel can be conductive and form a counter-electrode to an electrode that extends into an interior space of the treatment chamber.

During the treatment, desirably glow plasma forms on the surfaces of the contact bodies or contact formations.

Suitable contact bodies are metal balls or metal-coated balls. The contact bodies or contact formations may be shaped to have a diameter, and the diameter is desirably at least 1 mm and not more than 60 mm.

The pressure in the treatment vessel is usually less than 500 Pa. Desirably during the treatment, gas is fed to the treatment chamber and gas is removed from the treatment chamber through a filter. That is to say, it is fed through to maintain chemical composition if necessary and/or to avoid build-up of contamination.

The treated material, that is, the particles or disaggregated, deagglomerated or exfoliated components thereof resulting from the treatment, may be chemically functionalised by components of the plasma-forming gas, forming e.g. carboxy, carbonyl, OH, amine, amide or halogen functionalities on their surfaces. Plasma-forming gas in the treatment chamber may be or comprise e.g. any of oxygen, water, hydrogen peroxide, alcohol, nitrogen, ammonia, amino-bearing organic compound, halogen such as fluorine, halohydrocarbon such as CF₄, and noble gas. Oxygen-functionalised materials, plasma-processed in oxygen, or oxygen-containing gas, are particularly preferred.

Any other treatment conditions disclosed in the above-mentioned WO specifications may be used, additionally or alternatively. Or, other means of functionalising and/or disaggregating carbon nanoparticles may be used for the present processes and materials, although we strongly prefer plasma-treated materials.

For the present purposes the type and degree of chemical functionalization of the particles is selected for effective compatibility at the intended loadings with the selected polymer matrix or binder material. Routine experiments may be effective to determine this. Preferred materials are carbon nanotubes, especially materials comprising or consisting essentially of multiwall CNTs because these are routinely available. SWCNTs may be used additionally or alternatively, as may graphitic materials such as disclosed particularly in WO2012/076853.

A further option or proposal herein is to metallise the nanoparticles e.g. by a chemical or sputtering process, as an alternative mode of functionalisation.

Thus, it is a further aspect of the invention to prepare particulate conductive materials by a plasma treatment with functionalization as described above and then incorporate the particles into or onto a polymer film to confer conductivity and desirably to make a reflector e.g. optical solar reflector from the resulting electroconductive or static-dispersing film. Suitable film parameters have already been described and discussed above.

### Supplementary Conductive Means

A further aspect disclosed herein is an electrically-conductive or static-dispersing film or layer, such as a reflector or OSR, comprising one or more base layers and a grid or network of relatively conductive material on an exterior surface of a said base layer, or sandwiched between two said base layers, or incorporated into (embedded in) a said base layer. As already mentioned, this can supplement conductivity while leaving open areas which contribute to light transmission. For static dispersal the conductive pattern (grid or network) is desirably on an exterior surface, e.g. the front surface of an OSR or reflector having a reflector layer on the back surface.

The general dimensions of the film and its conductive parameters are not particularly limited and may be selected from any of those set out above in earlier aspects of our proposals. It may be a film of the first aspect, i.e. containing dispersed conductive particles in which case the conductive pattern may supplement the conductivity.

The conductive pattern may be made of any suitable patternable material, e.g. metals such as silver, copper or gold, or inorganic conductors such as ITO (indium-tin oxide) although the latter lacks flexibility for some applications, or from a bound dispersion (e.g. printable paste or ink containing conductive particles in a binder), or fine wires. Pattern formation may be e.g. by printing, sputtering or etching methods, appropriate to the materials used. Desirably the lines of the pattern are less than 500 µm wide, and/or the pattern occupies less than 5%, less than 2% or less than 1% of the area of the film or layer product.

This proposal for achieving or enhancing conductivity by an applied or embedded grid or network pattern is thought to be novel in itself. It is not restricted to special polymers intended for forming high-performance reflectors for use in space but may encompass standard polymers used for forming films, layers and coatings in industry, e.g. those polymers mentioned above. It may be used in plates or slab materials as well as in films.

### EXPERIMENTAL WORK

Sample films were prepared using PEI (polyetherimide) as the matrix polymer. The PEI used was 'Ultem 1000', from SABIC. Dichloromethane was used to dissolve the PEI.

MWCNTs were plasma functionalised in an oxygen-containing atmosphere, in line with the procedure described in WO2012/076853, tumbling in a rotating drum.

The oxygen-functionalised MWCNTs were added to the polymer solution. Various methods were tried to achieve optimum dispersion of the CNTs in the liquid. The most effective method was prolonged ultrasound agitation in an ultrasonic bath, with a temperature-controlled surrounding water bath if necessary to limit solvent evaporation during agitation.

MWCNTs were incorporated variously at 5%, 4%, 2%, 1% and 0.5% and 0.25% by weight relative to the polymer.

With some samples the ultrasound agitation was continued while allowing gradual evaporation of solution, the resulting carbon-filled thermoplastic polymer then being formed into pellets useful for compression moulding. These pellets were moulded between heated metal plates to form films about 100 um thick. The resulting films were translucent; their transparency was greatly improved by polishing. Even in these trial sample films transmission at 550 nm was better than 50% and the surface resistivity was as low as 10⁷ Ω/□ when the dispersion technique had been improved as described above.

Other samples were used for drop casting, draw casting and spin coating onto glass to form films. The cast films showed good transparency, with thicknesses from 10 to 60 µm. Draw casting was most effective for providing uniformity of carbon nanoparticle filler, with little filler aggregation which is always a tendency with carbon nanoparticles.

It was found that the conductivity depended strongly on the duration of dispersion and on choosing the appropriately functionalised nanoparticles. That is to say, conductivity could not be assured or raised by merely increasing the loading of nanoparticles, but rather by improving the degree of dispersion. This is important because the higher the loading the less the light transmission, and transmission is often important.

Selected MWCNT-loaded sample sheets were printed on one surface with a grid pattern of silver ink. The measured surface resistivity was of course very low on the side with the silver grid. Interestingly, even in films with a very low loading of MWCNTs, whose own surface resistivity had been little altered by the added carbon, the surface resistivity on the back side of a film with a printed silver grid on the front side was greatly reduced, much more than the back side of a plain PEI film (no MWCNTs) with a printed silver grid on the front side. This shows that the film material embodying the invention enables charge dispersion even without direct contact or exposure of an auxiliary conductor such a network of wire or printed conductive material to the location of static charge accumulation. The network could be embedded inside the layer, or on the side opposite, and still be effective.

Various of the samples, both with and without a front silver grid, were provided with a metal layer on the back surface to constitute an OSR material.

## Claims

1. Electrostatically-dispersive translucent or transparent film material comprising
a base layer comprising a film of polymer material in which carbon nanoparticles are dispersed to provide electrical conductivity the content of carbon nanoparticles being less than 3 wt% relative to the polymer material and the light transmission of the polymer film at 550 nm being at least 85%, and
a network of electrically conductive material on the surface of the polymer film
wherein the thickness of the polymer film is from 50 to 200 µm.

2. Film material according to claim 1 in which the carbon nanoparticles are carbon nanotubes.

3. Film material according to claim 2 in which the carbon nanotubes are chemically functionalised multiple-wall or single-wall carbon nanotubes.

4. Film material according to any one of the preceding claims in which the carbon nanoparticles are plasma-treated carbon nanoparticles carrying oxygen-containing or nitrogen-containing functional groups.

5. Film material of any one of the preceding claims in which the polymer material is thermoplastic.

6. Film material according to any one of the proceeding claims in which the polymer material is selected from polyether ether ketones (PEEK), polysulphones (PSU) and variants/sub-types such as polyethersulphones (PES) and polyphenylsulphones (PPSU), polyetherimides (PEI) polyimides, and fluoropolymers such polyvinyl fluorides (PVF), polyvinylidene fluorides (PVDF), amorphous polytetrafluoroethylenes (PTFE), polyolefins and polyesters.

7. Film material of any one of the preceding claims having an additional metallic reflector layer on a surface thereof.

8. An optical solar reflector made from film material of claim 7.

9. A method of making a film material of any one of claims 1 to 7, comprising dispersing carbon nanoparticles in the polymer material or precursor thereof in liquid form, (melt or solution) and forming a film therefrom.

10. Process according to claim 9 in which the carbon nanoparticles are dispersed by a dispersion method including ultrasonic agitation of the liquid.

11. Process according to claim 9 or 10 in which before said dispersion the carbon nanoparticles are functionalised by plasma treatment.

12. Process according to any one of claims 9 to 11 in which the carbon nanoparticles are prepared for said dispersion by treatment with glow plasma under agitation in a treatment chamber.

13. Process according to claim 12 in which said treatment under agitation in a treatment chamber is in the presence of a plurality of electrically conductive contact bodies.

## Patentansprüche

1. Elektrostatisch dispersives durchsichtiges oder transparentes Folienmaterial, umfassend:
eine Basisschicht, umfassend eine Folie aus Polymermaterial, in dem Kohlenstoffnanoteilchen dispergiert sind, um eine elektrische Leitfähigkeit bereitzustellen, wobei der Gehalt von Kohlenstoffnanoteilchen kleiner als 3 Gew.-% bezogen auf das Polymermaterial ist und die Lichtdurchlässigkeit der Polymerfolie bei 550 nm zumindest 85 % beträgt, und
ein Netzwerk aus elektrisch leitfähigem Material auf der Oberfläche der Polymerfolie,
wobei die Dicke der Polymerfolie 50 bis 200 µm beträgt.

2. Folienmaterial nach Anspruch 1, in dem die Kohlenstoffnanoteilchen Kohlenstoffnanoröhrchen sind.

3. Folienmaterial nach Anspruch 2, in dem die Kohlenstoffnanoröhrchen chemisch funktionalisierte Kohlenstoffnanoröhrchen mit mehreren Wänden oder einer Wand sind.

4. Folienmaterial nach einem der vorangegangenen Ansprüche, in dem die Kohlenstoffnanoteilchen plasmabehandelte Kohlenstoffnanoteilchen sind, die sauerstoffhältige oder stickstoffhältige funktionelle Gruppen tragen.

5. Folienmaterial nach einem der vorangegangenen Ansprüche, in dem das Polymermaterial thermoplastisch ist.

6. Folienmaterial nach einem der vorangegangenen Ansprüche, in dem das Polymermaterial aus Polyetheretherketonen (PEEK), Polysulfonen (PSU) und Varianten/Subtypen, wie z. B. Polyethersulfonen (PES) und Polyphenylsulfonen (PPSU), Polyetherimiden (PEI), Polyimiden und Fluorpolymeren wie Polyvinylfluoriden (PVF), Polyvinylidenfluoriden (PVDF), amorphen Polytetrafluorethylenen (PTFE), Polyolefinen und Polyestern ausgewählt ist.

7. Folienmaterial nach einem der vorangegangenen Ansprüche, das eine zusätzliche metallische Reflektorschicht auf einer Oberfläche davon aufweist.

8. Optischer Sonnenreflektor aus Folienmaterial nach Anspruch 7.

9. Verfahren zur Herstellung eines Folienmaterials nach einem der Ansprüche 1 bis 7, umfassend das Dispergieren von Kohlenstoffnanoteilchen in dem Polymermaterial oder einem Vorläufer davon in flüssiger Form (Schmelze oder Lösung) und Ausbilden einer Folie daraus.

10. Verfahren nach Anspruch 9, in dem die Kohlenstoffnanoteilchen durch ein Dispergierverfahren, einschließlich Ultraschallrühren der Flüssigkeit, dispergiert werden.

11. Verfahren nach Anspruch 9 oder 10, in dem die Kohlenstoffnanoteilchen vor der Dispersion durch Plasmabehandlung funktionalisiert werden.

12. Verfahren nach einem der Ansprüche 9 bis 11, in dem die Kohlenstoffnanoteilchen durch Behandlung mit Leuchtplasma unter Rühren in einer Behandlungskammer für die Dispersion vorbereitet werden.

13. Verfahren nach Anspruch 12, in dem die Behandlung unter Rühren in einer Behandlungskammer in Gegenwart einer Vielzahl von elektrisch leitfähigen Kontaktkörperchen erfolgt.

## Revendications

1. Matériau de film translucide ou transparent à dispersion électrostatique comprenant
une couche de base comprenant un film de matériau polymère dans lequel des nanoparticules de carbone sont dispersées pour établir une conductivité électrique, la teneur en nanoparticules de carbone étant inférieure à 3 % en poids par rapport au matériau polymère et la transmission lumineuse du film polymère à 550 nm étant d'au moins 85 %, et
un réseau de matériau électriquement conducteur sur la surface du film polymère,
dans lequel l'épaisseur du film polymère est de 50 à 200 µm.

2. Matériau de film selon la revendication 1, dans lequel les nanoparticules de carbone sont des nanotubes de carbone.

3. Matériau de film selon la revendication 2, dans lequel les nanotubes de carbone sont des nanotubes de carbone à parois multiples ou à paroi unique, chimiquement fonctionnalisés.

4. Matériau de film selon l'une quelconque des revendications précédentes, dans lequel les nanoparticules de carbone sont des nanoparticules de carbone traitées au plasma portant des groupes fonctionnels contenant de l'oxygène ou de l'azote.

5. Matériau de film selon l'une quelconque des revendications précédentes, dans lequel le matériau polymère est thermoplastique.

6. Matériau de film selon l'une quelconque des revendications précédentes, dans lequel le matériau polymère est choisi parmi des polyéther éther cétones (PEEK), polysulfones (PSU) et variants/sous-types tels que polyéthersulfones (PES) et polyphénylsulfones (PPSU), polyétherimides (PEI), polyimides, et fluoropolymères tels que fluorures de polyvinyle (PVF), fluorures de polyvinylidène (PVDF), polytétrafluoroéthylènes amorphes (PTFE), polyoléfines et polyesters.

7. Matériau de film selon l'une quelconque des revendications précédentes ayant une couche de réflecteur métallique supplémentaire sur une surface de celui-ci.

8. Réflecteur solaire optique fabriqué à partir d'un matériau de film selon la revendication 7.

9. Procédé de fabrication d'un matériau de film selon l'une quelconque des revendications 1 à 7, comprenant la dispersion de nanoparticules de carbone dans le matériau polymère ou un précurseur de celui-ci sous forme liquide (fondu ou solution), et la formation d'un film à partir de celui-ci.

10. Procédé selon la revendication 9, dans lequel les nanoparticules de carbone sont dispersées par un procédé de dispersion comprenant une agitation ultrasonique du liquide.

11. Procédé selon la revendication 9 ou 10, dans lequel, avant ladite dispersion, les nanoparticules de carbone sont fonctionnalisées par traitement au plasma.

12. Procédé selon l'une quelconque des revendications 9 à 11, dans lequel les nanoparticules de carbone sont préparées pour ladite dispersion par traitement à l'aide d'un plasma luminescent sous agitation dans une chambre de traitement.

13. Procédé selon la revendication 12, dans lequel ledit traitement sous agitation dans une chambre de traitement se déroule en présence d'une pluralité de corps de contact électriquement conducteurs.
